# EUROPEAN PATENT SPECIFICATION

(11) **EP 1 816 728 B1**
(45) Date of publication and mention of the grant of the patent: **02.11.2011**
(21) Application number: 05808081.3
(22) Date of filing: 25.10.2005
(51) Int. Cl.: H02K 5/24, F04D 29/66, F04D 25/12

(54) **AXIAL FLOW AIR EXTRACTOR FOR BATHROOMS AND SIMILAR**
AXIALSTRÖMUNGS-LUFTEXTRAKTOR FÜR BADEZIMMER UND ÄHNLICHES
EXTRACTEUR D'AIR A FLUX AXIAL POUR SALLES DE BAINS ET AUTRES

(30) Priority: 26.10.2004 ES 200402565
(43) Date of publication of application: 08.08.2007
(73) Proprietor: Soler & Palau, S.A., 17500 Ripoll (Barcelona) (ES)
(72) Inventor: PALAU FRANCAS, Josep, E-17500 Ripoll Gerona (ES)
(74) Representative: Intès, Didier Gérard André
(86) International application number: PCT/ES2005/000571
(87) International publication number: WO 2006/048481

(56) References cited:
- EP-A- 0 982 501
- DE-A1- 19 906 585
- ES-T3- 2 121 137
- ES-U- 1 038 510
- JP-A- 11 234 958
- JP-A- 2000 023 419
- US-B1- 6 378 834

## Description

The present invention relates to an axial flow air extractor for bathrooms and similar, the new features of which provide a number of advantages, as will be detailed in the present specification.

The main objective sought by the present invention is to provide an air extractor for bathrooms, washrooms and similar, with which the operating noise level is reduced to a minimum and which additionally allows increasing the efficiency in relation to extractors which have been used up until now for the same purposes and applications.

The extractors of the state of the art have the drawback that they cause a high operating noise level, which is a nuisance for the user. The noise of these extractors during operation is mainly due to the passage of air through the fan components, such as the protective grating, the propeller and the motor mount. The noise is also due to the vibration generated by the electric motor actuating the fan propeller. This vibration propagates from the body of the extractor to the structures of the installation which are generally plasterboards, metal plates, etc., defining the false ceiling or partition of the construction in which said extractor is installed.

European patent number EP 0 668 650 describes a fan provided with an element for damping the vibrations generated by the electric motor. Said damping element is disc-shaped and is arranged centrally relative to the motor axis. The damping element is connected on one side to the electric motor by means of three or more screws distributed in the periphery of the disc, and on the other side to the fan mount also by means of screws arranged in the periphery of the damping element.

In the fan described in said patent, the damping means is formed by a single damping element connected to the motor and to the casing of the fan by means of regularly distributed screws along its periphery.

This configuration of a single element has the drawback that the selection of the elastic material is very critical due to the fact that the choice of an excessively soft material can more efficiently absorb the vibrations produced in the fan operation, but having a single damping element will cause, however, a torque caused by the weight of the motor itself, since its center of gravity is not in the vertical of the damper. In contrast, an excessively rigid material will withstand the effect of said torque but, however, it will favor the transmission of vibrations to the assembly.

On the other hand, the structure of the damping element described in this patent does not provide for the omnidirectional damping of the motor as it has a substantially solid disc-shaped element. Said solution further does not provide for the application to axial flow extractors.

Another example of an extractor according to the prior art is disclosed in EP 0 982 501 A1.

A shaft supporting hub ring according to the prior art is disclosed in US 6 378 834 B1.

The invention proposes a new type of extractor with which the noise and vibrations are considerably reduced in relation to extractors of the prior art. To that end, the different types of vibration generated by the motor actuating conventional extractors have been analyzed. These vibrations are difficult to intrinsically solve, such that different designs have been worked with so as to isolate said vibrations from the rest of the structure of the extractor, as well as from the rest of the installation (false ceiling or partition of the construction, etc).

The result of the study carried out is an axial flow air extractor for bathrooms and similar, as described below. The axial flow extractor of the invention as defined in claim 1 is formed by a support body which in turn is formed by a cylindrical part and a laminar part essentially orthogonal to the former. The cylindrical part is intended for the embedding of the extractor, whereas the laminar part is designed to fix the assembly to a wall, ceiling or false ceiling. A central receptacle is also arranged in which a casing is housed. This central receptacle is integrally connected to the mentioned support body by means of guidelines.

There is arranged a blade-equipped propeller assembly acting as an axial fan and an electric motor which rotates said propeller assembly by means of its actuation shaft, and which is housed in the previously mentioned housing, which has a cylindrical area.

The extractor is equipped with vibration damping means, the purpose of which is to absorb the vibrations caused during the operation of the air extractor

Said damping means are formed by two elastic elements that connect with relative rotation ability the mentioned casing to the motor actuation shaft in am elastic manner. These two elastic elements are arranged close to the opposite ends of said motor actuation shaft.

The casing of the fan has a cylindrical configuration and said two elastic elements of the damping means each have an equivalent discoid configuration, being adapted to be arranged substantially at the ends of said casing.

The two elastic elements can be manufactured with high performance thermoplastic rubber for the application and are sized and shaped to be coupled to said ends of the casing.

Each of said two elastic elements is formed by an outer edge connected to one of the half-bodies and an inner disc defined by a circular flat bar with an inner hole for the passage of the actuation shaft. The outer edge and said disc are connected to one another by series of radial elastic connection elements. Each series of radial elastic connection elements preferably comprises a pair of radial elastic connection elements of a substantially curved shape and symmetrical to one another, between which there is arranged a third radial elastic connection element of a substantially straight configuration.

In a particular embodiment of the extractor of the invention, the casing thereof is formed by two identical half-bodies opposite one another, each of which is provided with the previously described vibration damping means. Each of said half-bodies of the casing has a series of flanges and a series of side cavities. These flanges and cavities are adapted to be coupled in respective complementary flanges and side cavities of the other half-body of the casing. This allows simple, fast and effective coupling between both elements without elements projecting from the casing of the extractor.

In turn, the assembly formed by the electric motor, the elastic elements and the two identical half-bodies forming the casing, is assembled in the support body of the extractor by means of a slight rotation as a result of outer flanges attached to each half-body of the casing.

The two elastic elements present a good absorption performance which is proven effective for eliminating the vibrations over time in adverse conditions, such as high temperatures, extreme moisture, dirt, etc. Aging tests conducted in different conditions have proven the correct operation of the described extractor, which forms equipment with a substantially inexistent noise level and with a high performance, providing greater efficiency in relation to conventional equipment. By way of comparison, current extractors for bathrooms and similar at best provide an air flow rate of about 90 m³/h, with a noise level of about 54 dB (A) sound power level. The noise usually caused by these conventional extractors has pure frequencies that are bothersome to the human ear in long periods of use. In contrast, the extractor of the present invention has demonstrated that it provides an air flow rate up to 120 m³/h, with a much lower noise level, in the order of 47 dB (A) sound power level, and free of pure tones. This functional improvement is obtained with a cost level that is consistent with this type of extractors.

The features and advantages of the axial flow air extractor for bathrooms and similar object of the present invention will become clearer from the detailed description of a preferred embodiment. Said description will be made hereinafter by way of a non-limiting example, with reference to the drawings attached to this specification.

In said drawings:
Figure 1 is a perspective view of a complete built-in type bathroom extractor according to the invention, showing the assembly formed by the casing, the elastic damping elements and the electric motor;
Figure 2 is a perspective view showing an embodiment of the casing and the elastic elements of the axial flow air extractor of Figure 1;
Figure 3 is an elevational view of the casing of Figure 2 in which the vibration damping means can be seen;
Figure 4 is a partial enlarged view showing the configuration of the radial elastic connection elements in detail; and
Figure 5 is a sectional elevational view of one of the two identical half-bodies forming the casing of the motor.
Figure 6 is a complete perspective view of the previous half-body.
Figure 7 is a diametrically sectional perspective view of the same half-body.

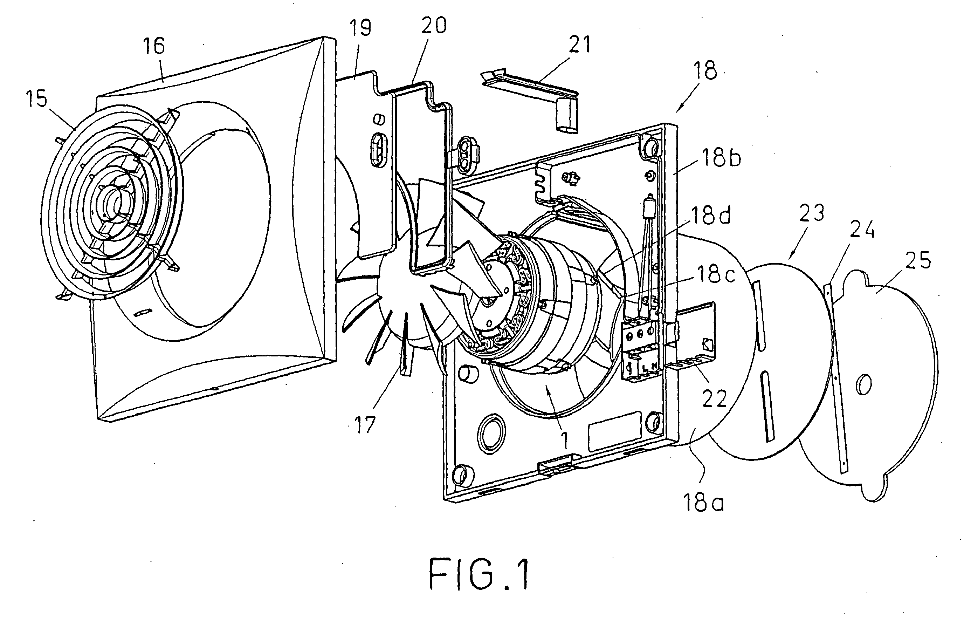

Figure 1 shows the basic components of an axial flow air extractor according to an embodiment of the invention. It is an extractor for use in bathrooms and is of the type to be built into a false ceiling, partition, etc.

The illustrated extractor comprises a casing (1) having a cylindrical area, with a laminar grating (15) housed in a front frame or mouth (16).

The casing (1) internally houses an electric motor which rotates a propeller assembly (17), as can be seen in Figure 1 of the attached drawings.

The casing (1) of the extractor is arranged between the front mouth (16) and a support body (18), between which the cover of the circuit (19) is placed with its corresponding joint (29), as well as a channel (21) for the cables of the connection plate(22), as can be seen.

As can be seen in Figure 1, the support body (18) is formed by a cylindrical part (18a) which is intended to be embedded, and a laminar part (18b) designed to fix the assembly to a wall or ceiling, which is essentially orthogonal to said cylindrical part (18a), and a central receptacle (18c) in which the casing (1) is housed. The central receptacle (18c) is integrally connected to the support body (18) by means of guidelines (18d).

The assembly is completed with an obturator (23) which can rotate about a shaft (24) and which is protected by means of a protector (25) as shown in Figure 1.

The extractor has vibration damping means (2) which have the function of absorbing the vibrations occurring during the operation of the air extractor.

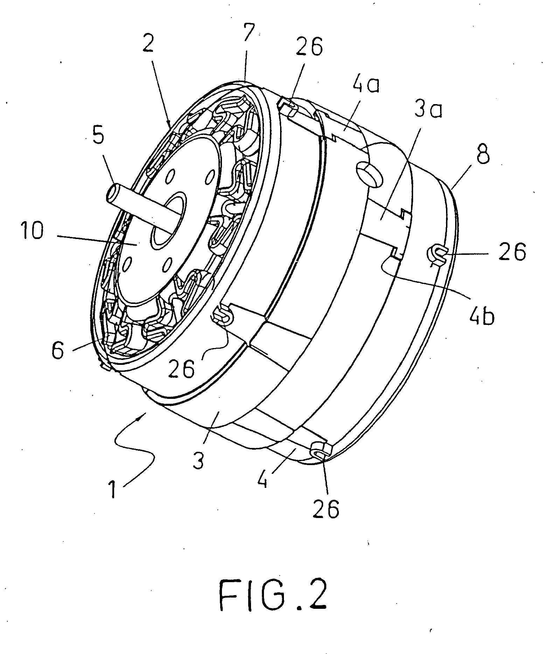

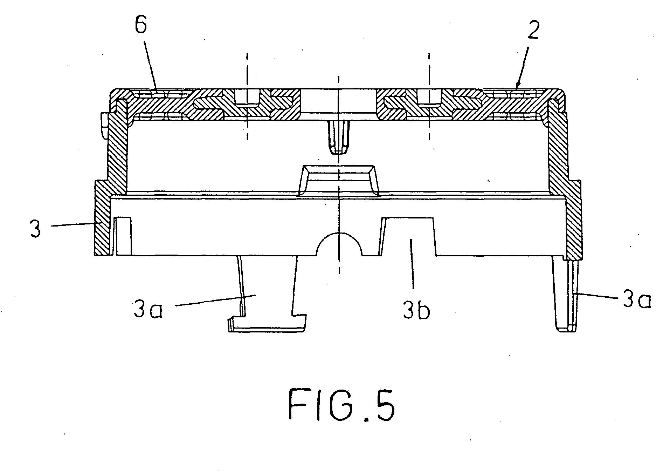

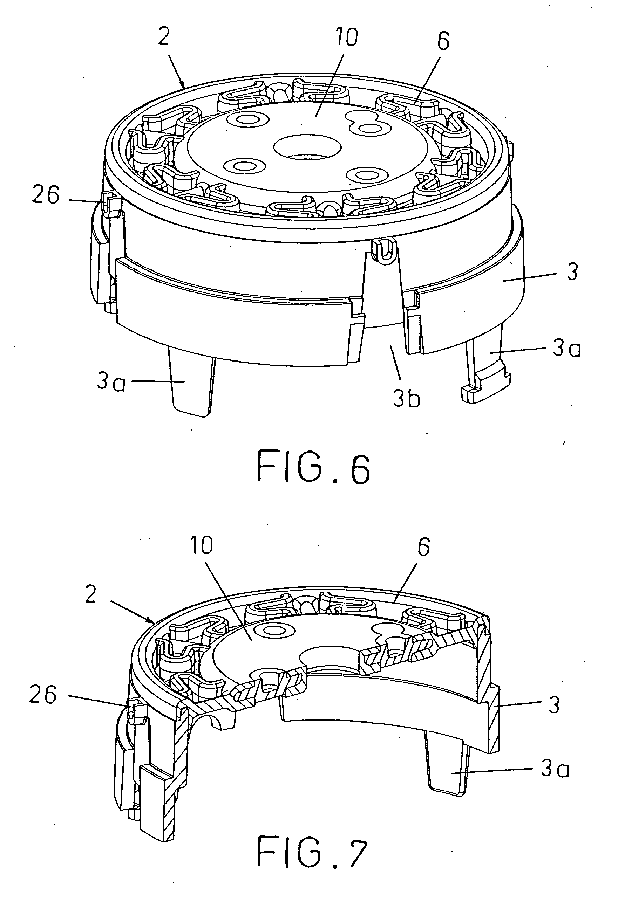

According to the enlarged drawings of Figures 2 to 7, the casing (1) externally encompassing the motor has a substantially cylindrical configuration formed by two cylindrical identical half-bodies (3, 4) arranged one before the other. Each of said half-bodies (3, 4) is appropriately provided with the mentioned vibration damping means (2) as will be described below.

The half-body (3) is provided with flanges (3a) and cavities (3b) adapted to be coupled in respective complementary flanges (4a) and cavities (4b) of the other half-body (4) of the casing (1), as can be seen in the perspective view of Figure 2.

The identical half-bodies (3, 4) defining the casing (1) of the extractor also have flanges (26) which allow assembling the assembly formed by the casing and the motor in the support body (18) shown in Figure 1.

The motor actuation shaft (5) is centered inside the casing (1) of the extractor and associated thereto in an elastic manner through the vibration damping means (2). In the embodiment shown in the figures, the mentioned vibration damping means (2) comprise respective circular elements (6) of a substantially elastic nature which are respectively coupled to the ends (7, 8) of the casing (1) of the extractor (1). Said elastic elements (6) form a single construction part with the corresponding half-bodies (3, 4) of the casing.

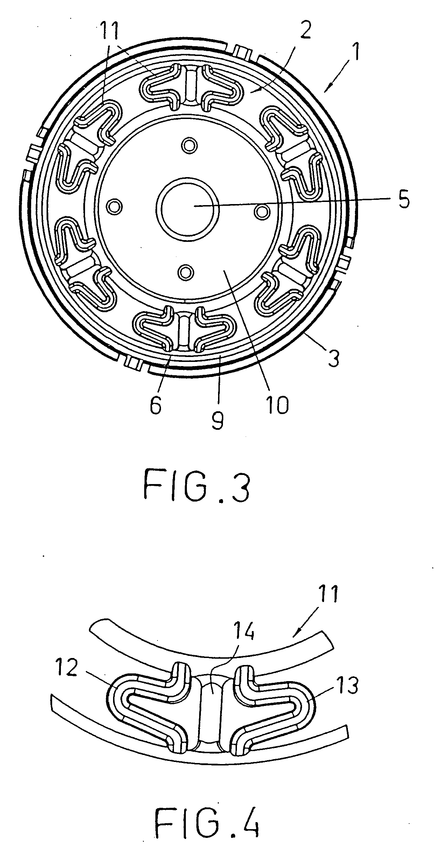

Each elastic circular element (6) is formed, in the particular embodiment shown by way of example in the attached figures, by an outer edge (9) connected to one of the half-bodies (3, 4) and an inner disc (10) through which the shaft (5) of the motor passes, as can particularly be seen in the frontal view of Figure 3. The outer edge (9) and the inner disc (10) of said elastic elements (6) are connected to one another by means of series of radial elastic connection elements (11), manufactured with thermoplastic rubber or with any other suitable material.

Making particular reference to the view in Figure 4 of the drawings, the radial elastic connection elements (11) are formed by a pair of radial elastic connection elements (12, 13) of a substantially curved shape and symmetrical to one another. Said elastic connection elements (12, 13) are separated from one another and arranged between them there is a third radial elastic connection element (14) of a substantially straight configuration.

With the described configuration, omnidirectional damping of the vibrations of the actuation motor is achieved, such that the vibrations and noises generated by the extractor are reduced to a minimum. The arrangement of two circular elements (6) of a substantially elastic nature assembled at the opposite ends of the actuation shaft (5) further eliminates any possibility of torques being generated caused by the weight of the motor itself, as occurs in certain apparatuses of the state of the art.

Having sufficiently described the axial flow air extractor for bathrooms and similar of the present invention in relation to the attached drawings, it is understood that modifications are possible within the scope of the appended claims.

## Claims

1. A built-in type axial flow air extractor for bathrooms and similar, of those comprising
- a support body (18) formed by a cylindrical part (18a) which is intended to be embedded, and a laminar part (18b) designed to fix the assembly to a wall or ceiling, which is essentially orthogonal to said cylindrical part (18a),
- a central receptacle (18c) housing a casing (1) and guidelines (18d) for connecting said central receptacle (18c) to the mentioned support body (18),
- a blade-equipped propeller assembly (17) acting as an axial fan and an electric motor which rotates said propeller assembly (17) by means of its actuation shaft (5), and which is housed in said casing (1) having a cylindrical area, and
- damping means adapted to dampen the vibrations produced during the operation of said electric motor,
**characterized in that** said damping means (2) comprise two elastic elements (6) connecting with relative rotation ability the mentioned casing (1) to said actuation shaft (5), in an elastic manner, said elastic elements (6) being arranged close to the opposite ends of said actuation shaft (5), **in that** said elastic elements (6) of the damping means (2) each have a discoid configuration equivalent to the interior of said casing (1), being adapted to be arranged substantially at the ends (7, 8) thereof, and **in that** said casing (1) is formed by two half-bodies (3, 4), and **in that** said elastic elements (6) are formed by an outer edge (9) connected to one of said half-bodies (3, 4) and an inner disc (10), each elastic element (6) being a single part with the corresponding half-body (3, 4) and said outer edge (9) and said inner disc (10) being connected to one another by series of radial elastic connection elements (11).

2. An extractor according to claim 1, wherein each of said series of radial elastic connection elements (11) comprises a pair of radial elastic connection elements (12, 13) of a substantially curved shape and symmetrical to one another, between which there is arranged a third radial elastic connection element (14) of a substantially straight configuration.

3. An extractor according to any of the previous claims, wherein said casing (1) is formed by two identical half-bodies (3, 4) arranged one before the other, each of which is provided with said damping means (2), one of said half-bodies (3) being provided with flanges (3a) and cavities (3b) adapted to be coupled in respective complementary flanges (4a) and cavities (4b) of the other half-body (4).

4. An extractor according to any one of claims 1 to 3, wherein the half-bodies (3, 4) have outer flanges (26) which allow assembling the assembly formed by the casing (1) and the motor in said central receptacle (18c) which, in turn, is integrally connected to the support body (18) by means of guidelines (18d).

## Patentansprüche

1. Luftabzug mit Axialströmung vom Einbautyp für Badezimmer und dergleichen, umfassend:
- einen Trägerkörper (18), der gebildet wird durch ein zylindrisches Teil (18a), welches dafür gedacht ist, eingebettet zu werden, und ein lamellenförmiges Teil (18b), welches ausgebildet ist, um die Baugruppe an einer Wand oder einer Decke zu befestigen, und welches zu dem zylindrischen Teil (18a) im wesentlichen orthogonal verläuft,
- eine mittige Aufnahme (18c), welche ein Gehäuse (1) aufnimmt, und Führungsstege (18d) zum Verbinden der mittigen Aufnahme (18c) mit dem genannten Trägerkörper (18),
- eine mit Schaufeln bestückte Propellerbaugruppe (17), die als Axialventilator dient, und einen Elektromotor, der die Propellerbaugruppe (17) mittels seiner Betätigungswelle (5) dreht und der in dem Gehäuse (1) mit einer zylindrischen Fläche untergebracht ist, und
- Dämpfungsmittel, die ausgebildet sind, um die Schwingungen, die während des Betriebs des Elektromotors erzeugt werden, zu dämpfen,
**dadurch gekennzeichnet,**
**daß** die Dämpfungsmittel (2) zwei elastische Elemente (6) umfassen, die mit Fähigkeit zu relativer Rotation das genannte Gehäuse (1) auf elastische Weise mit der Betätigungswelle (5) verbinden, wobei die elastischen Elemente (6) nahe den entgegengesetzten Enden der Betätigungswelle (5) angeordnet sind,
**daß** die elastischen Elemente (6) der Dämpfungsmittel (2) jeweils eine scheibenartige Ausgestaltung entsprechend dem Inneren des Gehäuses (1) aufweisen, wobei sie ausgebildet sind, um im wesentlichen an den Enden (7, 8) davon angeordnet zu werden,
**daß** das Gehäuse (1) durch zwei Halbkörper (3, 4) gebildet wird
und **daß** die elastischen Elemente (6) durch eine Außenkante (9) gebildet werden, die mit einem der Halbkörper (3, 4) und einer inneren Scheibe (10) verbunden ist, wobei jedes elastische Element (6) ein einziges Teil mit dem entsprechenden Halbkörper (3, 4) ist und die Außenkante (9) und die innere Scheibe (10) durch eine Reihe von radialen elastischen Verbindungselementen (11) miteinander verbunden sind.

2. Abzug nach Anspruch 1, wobei jedes der Reihe von radialen elastischen Verbindungselementen (11) ein Paar von radialen elastischen Verbindungselementen (12, 13), die eine im wesentlichen gekrümmte Form aufweisen und zueinander symmetrisch sind, umfaßt, zwischen denen ein drittes radiales elastisches Verbindungselement (14) mit einer im wesentlichen geraden Ausgestaltung angeordnet ist.

3. Abzug nach einem beliebigen der vorhergehenden Ansprüche, wobei das Gehäuse (1) durch zwei identische Halbkörper (3, 4) gebildet ist, wobei einer vor dem anderen angeordnet ist, wobei jeder dieser mit den Dämpfungsmitteln (2) versehen ist, wobei einer der Halbkörper (3) mit Flanschen (3a) und Aussparungen (3b) versehen ist, die derart ausgebildet sind, dass sie in entsprechenden komplementären Flanschen (4a) und Aussparungen (4b) des anderen Halbkörpers (4) gekoppelt werden können.

4. Abzug nach einem beliebigen der Ansprüche 1 bis 3, wobei die Halbkörper (3, 4) äußere Flansche (26) aufweisen, die das Montieren der Baugruppe, welche durch das Gehäuse (1) und den Motor gebildet wird, in der mittigen Aufnahme (18c) ermöglichen, die ihrerseits mittels Führungsstegen (18d) einstückig mit dem Trägerkörper (18) verbunden ist.

## Revendications

1. Extracteur d'air à écoulement axial du type intégré pour des salles de bains et équivalent, de ceux comportent :
- un corps de support (18) formé par une partie cylindrique (18a) qui est prévue pour être intégrée, et une partie laminaire (18b) configurée pour fixer l'ensemble sur un mur ou au plafond, qui est essentiellement orthogonale à ladite partie cylindrique (18a),
- un réceptacle central (18c) renfermant un boîtier (1) et des guides (18d) pour relier ledit réceptacle central (18c) audit corps de support (18),
- un ensemble d'hélice pourvue de pales (17) agissant en tant que ventilateur axial et un moteur électrique qui fait tourner ledit ensemble d'hélice (17) au moyen de son arbre d'actionnement (5), et qui est logé dans ledit boîtier (1) ayant une zone cylindrique, et
- des moyens d'amortissement prévus pour amortir les vibrations produites pendant le fonctionnement dudit moteur électrique,
**caractérisé en ce que** lesdits moyens d'amortissement (2) comportent deux éléments élastiques (6) reliant avec une capacité de rotation relative ledit boîtier (1) audit arbre d'actionnement (5), d'une manière élastique, lesdits éléments élastiques (6) étant disposés près des extrémités opposées dudit arbre d'actionnement (5), **en ce que** lesdits éléments élastiques (6) des moyens d'amortissement (2) ont chacun une configuration discoïde équivalente à l'intérieur dudit boîtier (1), en étant prévus pour être disposés sensiblement aux extrémités (7, 8) de celui-ci, et **en ce que** ledit boîtier (1) est formé par deux demi-corps (3, 4), et **en ce que** lesdits éléments élastiques (6) sont formés par un bord extérieur (9) relié à l'un desdits demi-corps (3, 4) et à un disque intérieur (10), chaque élément élastique (6) étant une partie unique avec le demi-corps correspondant (3, 4), et ledit bord extérieur (9) et ledit disque intérieur (10) étant reliés l'un à l'autre par des séries d'éléments de raccordement élastiques radiaux (11).

2. Extracteur selon la revendication 1, dans lequel chacune desdites séries d'éléments de raccordement élastiques radiaux (11) comporte une paire d'éléments de raccordement élastiques radiaux (12, 13) d'une forme sensiblement courbe et symétriques l'un par rapport à l'autre, entre lesquels est disposé un troisième élément de raccordement élastique radial (14) d'une configuration essentiellement droite.

3. Extracteur selon l'une quelconque des revendications précédentes, dans lequel ledit boîtier (1) est formé par deux demi-corps identiques (3, 4) disposé l'un avant l'autre, dont chacun est pourvu desdits moyens d'amortissement (2), un desdits demi-corps (3) étant pourvu d'ailes (3a) et de cavités (3b) prévus pour être reliés à des ailes (4a) et des cavités (4b) complémentaires respectives de l'autre demi-corps (4).

4. Extracteur selon l'une quelconque des revendications 1 à 3, dans lequel les demi-corps (3, 4) ont des brides extérieures (26) qui permettent l'assemblage de l'ensemble formé par le boîtier (1) et le moteur dans ledit réceptacle central (18c) qui, à son tour, est relié d'un seul tenant au corps de support (18) au moyen de guides (18d).
